# EUROPÄISCHE PATENTSCHRIFT

(11) **EP 1 913 098 B1**
(45) Veröffentlichungstag und Bekanntmachung des Hinweises auf die Patenterteilung: **21.12.2011**
(21) Anmeldenummer: 06762819.8
(22) Anmeldetag: 26.07.2006
(51) Int. Cl.: C09D 5/08, C09D 17/00

(54) **CHROMFREIE, ZINKARME, KORROSIONSHEMMENDE PIGMENTMISCHUNG, VERFAHREN ZU IHRER HERSTELLUNG UND IHRE VERWENDUNG**
CHROME-FREE AND ZINC-POOR ANTI-CORROSIVE PIGMENT MIXTURE AND METHOD FOR THE PRODUCTION AND USE THEREOF
MELANGE PIGMENTAIRE ANTICORROSIF SANS CHROME ET PAUVRE EN ZINC, PROCEDE DE PRODUCTION ET UTILISATION ASSOCIES

(30) Priorität: 04.08.2005 DE 102005036630
(43) Veröffentlichungstag der Anmeldung: 23.04.2008
(73) Patentinhaber: BASF Coatings GmbH, 48165 Münster (DE)
(72) Erfinder: LAUMANN, Gisela, 48165 Münster (DE); VOGT, Andreas, 48157 Münster (DE); PHILIPS, Ewald, 48308 Senden (DE)
(74) Vertreter: Leifert & Steffan
(86) Internationale Anmeldenummer: PCT/EP2006/007371
(87) Internationale Veröffentlichungsnummer: WO 2007/014683

(56) Entgegenhaltungen:
- EP-A2- 0 296 540
- WO-A-02/24344
- WO-A-03/011984
- WO-A-2006/015756
- DE-A1- 19 826 379
- DE-A1- 19 907 287
- US-B1- 6 464 899
- US-B1- 6 596 061

## Beschreibung

### Gebiet der Erfindung

Die vorliegende Erfindung betrifft eine neue, chromfreie, zinkarme, korrosionshemmende Pigmentmischung. Außerdem betrifft die vorliegende Erfindung ein neues Verfahren zur Herstellung einer chromfreien, zinkarmen, korrosionshemmenden Pigmentmischung. Des Weiteren betrifft die vorliegende Erfindung die Verwendung der neuen, chromfreien, zinkarmen, korrosionshemmenden Pigmentmischung und der nach dem neuen Verfahren hergestellten chromfreien, zinkarmen, korrosionshemmenden Pigmentmischung für die Herstellung neuer, chromfreier, zinkarmer, härtbarer Materialien, insbesondere Grundiermaterialien, speziell Primer, Grundierfüller, Füller und Spachtel. Nicht zuletzt betrifft die vorliegende Erfindung die Verwendung der neuen, chromfreien, zinkarmen, härtbaren Materialien für die Herstellung von neuen, chromfreien, zinkarmen, korrosionshemmenden, gehärteten Materialien, insbesondere Grundierungen und Zwischenbeschichtungen.

### Stand der Technik

Primerlackierungen oder kurz Primer ist die Sammelbezeichnung für dünne Schichten, die unmittelbar auf ein Metallsubstrat aufgebracht werden, um in einem Beschichtungssystem eine bestimmte Funktion als Grundierung, insbesondere zur Haftvermittlung und zum Korrosionsschutz, zu übernehmen (vgl. Römpp Lexikon Lacke und Druckfarben, Georg Thieme Verlag, Stuttgart, New York, 1998, »Primer«).

Grundierfüller oder Füllprimer sind Grundbeschichtungsstoffe, die die Eigenschaften von Grundierungen und Füllern in sich vereinigen (vgl. Römpp Lexikon Lacke und Druckfarben, Georg Thieme Verlag, Stuttgart, New York, 1998, »Grundierfüller«).

Grundiermaterialien, inklusive der Materialien für Zwischenbeschichtungen, sind Beschichtungsstoffe, die direkt auf ein Substrat oder auf eine Altlackierung zu Reparaturzwecken appliziert werden. Dazu gehören insbesondere Grundierfüller, Primer, Füller und Spachtel (vgl. Römpp Lexikon Lacke und Druckfarben, Georg Thieme Verlag, Stuttgart, New York, 1998, »Grundiermaterialien«).

Füller sind Beschichtungsstoffe zur Zwischenbeschichtung in der Automobilserien-, Autoreparatur- und Industrielackierung. Sie haben die Aufgabe, Unebenheiten des Substrats auszugleichen, Haftung und Korrosionsschutz zu unterstützen (insbesondere als Grundierfüller) sowie für eine gute Steinschlagfestigkeit des gesamten Beschichtungssystems oder der Mehrschichtlackierung zu sorgen (vgl. Römpp Lexikon Lacke und Druckfarben, Georg Thieme Verlag, Stuttgart, New York, 1998, »Füller«; oder Goldschmidt/Streitberger, BASF Handbuch Lackiertechnik, Vincentz Verlag, Hannover, 2002, »7.1.4 Füller«, Seiten 725 bis 728, und »7.2 Automobilreparaturlackierung«, Seiten 737 bis 744).

Spachtel oder Spachtelmassen sind nach DIN 55945:1996-09 pigmentierte, hochgefüllte Beschichtungsstoffe, die für den Ausgleich von Untergrundunebenheiten eingesetzt werden, die zu groß für eine Korrektur durch Grundierungen oder Füller sind (vgl. Römpp Lexikon Lacke und Druckfarben, Georg Thieme Verlag, Stuttgart, New York, 1998, »Spachtel«; oder Goldschmidt/Streitberger, BASF Handbuch Lackiertechnik, Vincentz Verlag, Hannover, 2002, »7.2 Automobilreparaturlackierung«, Seiten 737 bis 744).

Die korrosionshemmende Wirkung der vorstehend beschriebenen Beschichtungen beruht insbesondere auf ihrem Gehalt an Korrosionsschutz-Pigmenten (vgl. Römpp Lexikon Lacke und Druckfarben, Georg Thieme Verlag, Stuttgart, New York, 1998, »Korrosionsschutz-Beschichtungsstoff« und »Korrosionsschutz-Pigmente«). Eine besonders hohe Korrosionsschutzwirkung entfalten dabei chromat- und/oder zinkhaltige Korrosionsschutz-Pigmente (vgl. a. a. O., »Chromat-Pigmente«, »Zinkchromate«, »Zinkoxid«, zinkphosphat« und »Zink-Pigmente«, sowie die deutsche Patentanmeldung DE 100 48 268 A1). Indes sind diese Pigmente toxikologisch sehr bedenklich, weswegen die Fachwelt bestrebt ist, sie durch andere, toxikologisch weniger bedenkliche oder unbedenkliche Korrosionsschutz-Pigmente zu ersetzen.

Chrom-und zinkfreie Korrosionsschutz-Pigmente sind an sich bekannt.

So wird von der Firma Heubach GmbH kristallwasserfreies Calciumhydrogenphosphat unter der Marke Heucophos® CHP als Korrosionsschutz-Pigment für wasserverdünnbare Hybrid-Systeme vertrieben.

Die Firma Lawrence Industries vertreibt Calciumsborsilikate, insbesondere Halox® CW-2230, als Korrosionsschutz-Pigmente für Beschichtungsstoffe auf der Basis von Alkydharzen, Epoxidharzestern, Ölen, Phenolharzen, Aikyd/Chlorkautschuk und VT-Alkydharzen.

Die Firma Grace vertreibt amorphes calciummodifiziertes Siliziumdioxid unter der Marke Shieldex® AC-3 als nicht-toxisches Korrosionsschutz-Pigment für Coil-Coating-Grundierungen und 1- oder 2-Komponenten Wash-Primer.

Die Firma Heubach vertreibt außerdem das Zinksalz einer organischen Nitroverbindung (Zinkgehalt: 44 Gew.-%) unter der Marke Heucorin® RZ als Korrosionsinhibitor für Beschichtungen.

Es hat sich aber gezeigt, dass keines dieser Korrosionsschutz-Pigmente und keiner der Inhibitoren für sich alleine eine Korrosionsschutzwirkung hat, die ausreicht, um die strengen Anforderungen zu erfüllen, die an die Grundierungsmateriallen für die Autoreparaturlackierung gestellt werden. Außerdem lassen die betreffenden Grundiermaterialien bzw. die hieraus hergestellten Grundierungen und Zwischenbeschichtungen in ihrer Haftung zum Substrat und ihrer Zwischenschichthaftung sowie ihrer Steinschlagschutzwirkung zu wünschen übrig.

Die WO 2006/015756 A1 offenbart ein Verfahren zum Beschichten von metallischen Oberflächen mit einer korroslonsschützenden Zusammensetzung, die leitfähiges Polymer enthält. Durch die Verwendung des besagten Polymeres soll bei einer Beschädigung der Beschichtung ein Heilungseffekt (Repair-Effekt) auftreten.

In der Patentschrift US 6,464,899 B1 werden Beschichtungsmittel zur Korrosionsinhibierung von metallischen Substraten beschrieben. Die dort offenbarten Beschichtungsmittel sind kostengünstig, leicht handhabbar und mit Hilfe von konventionellen Methoden wieder entfernbar. Es wird eine Vielzahl von möglichen Korrosionsinhibitoren genannt, unter denen sich auch Dicyclohexylamin-Chromat befindet.

Die WO 03/011984 A2 offenbart eine schweiß- und härtbare Beschichtungszusammensetzung mit verbesserter Zwischenhaftung. Diese kann eine oder mehrere korrosionsinhiblerende Verbindungen wie z.B. Korrosionsschutz-Pigmente enthalten. Üblicherweise ist die Beschichtungszusammensetzung frei von chromhaltigen Verbindungen; d.h. der gewichtsprozantuale Anteil an chromhaltigen Verbindungen (ausgedrückt als CrO₃) liegt typischerweise im Bereich von 0,00001 bezogen auf das Gesamtgewicht des Feststoffanteils der Beschichtungszusammensetzung.

Die Schrift WO 02/24344 A2 betrifft ein Verfahren zur Beschichtung eines metallischen Bandes für die Fahrzeug-, Luftfahrt- oder Raumfahrtindustrie, wobei das Band bzw. ggf. die im folgenden Prozess daraus hergestellten Bandabschnitte zuerst mit mindestens einer Korrosionsschutzschicht und danach mit mindestens einer Schicht einer lackähnlichen Polymer-haltigen Schicht überzogen werden, wobei das Band nach dem Beschneiden mit mindestens einer Korrosionsschutzschicht oder nach dem Beschichten mit mindestens einer Schicht einer lackähnlichen Beschichtung zu Bandabschnitten zerteilt wird, wobei die beschichteten Bandabschnitte dann umgeformt, gefügt oder/und mit mindestens einer (weiteren) lackähnlichen Schicht oder/und Lackschicht beschichtet werden, wobei die lackähnliche Beschichtung durch Beschichten der Oberfläche mit einer wässrigen Dispersion, welche unter anderem mindestens einen Korrosionsinhibitor enthält, entsteht. Abhängig vom jeweiligen Verfahrensschritt können Dispersionen verwendet werden, welche weitgehend oder gänzlich frei von Schwermetallen wie Chrom, Kupfer und Nickel sind.

Die Offenlegungsschrift DE 198 26 379 A1 offenbart Weißpigmente für den Korrosionsschutz, welche aus oberflächenbeschichteten TiO₂-Grundkörpern bestehen, wobei zur Verbesserung der korrosionsinhibierenden Wirkung auf besagte Grundkörper Mn₃(PO₄)₂ oder Zn₃(PO₄)₂ sowie entsprechende Mischungen dieser belden Phosphate und eine oder mehrere der Substanzen, ausgewählt aus Aluminiumoxiden, -hydroxiden, -phosphaten, -hydrogenphosphaten, -dihydrogenphosphaten und -polyphosphaten, aufgefällt sind.

In den Schriften DE 199 07 287 A1 und US 6,596,061 B1 werden anorganische Korrosionsschutz-Pigmente offenbart, welche aus oberflächenbeschichteten Festkörpern mit einer Korngröße von 0,1 bis 75 µm bestehen. Zur Verbesserung der Beständigkeit der solche Pigmente enthaltenden Anstriche und Beschichtungen sind auf die Festkörper Mn₃(PO₄)₂ oder Zn₃(PO₄)₂ sowie entsprechende Mischungen dieser beiden Phosphate und eine oder mehrere der Substanzen, ausgewählt aus Aluminiumoxiden, -hydroxiden, -phosphaten, -hydrogenphosphaten, -dihydrogenphosphaten und -polyphosphaten, aufgefällt.

Die EP 0 296 540 A2 offenbart chromatfreie Beschichtungszusammensetzungen für Aluminium und Aluminiumlegierungen, welche ein Bindemittel auf der Basis von Polyvinylbutyral und Phenolharz und als Korrosionsschutzpigment eine homogene Mischung und/oder ein Mischkristallisat von Calciumhydrogenphosphat und Magnesiumhydrogenphosphat, ggf. zusammen mit Zinkoxid, enthalten.

### Aufgabenstellung

Der vorliegenden Erfindung lag die Aufgabe zugrunde, eine neue, chromfreie, zinkarme, korroslonshemmende Pigmentmischung bereitzustellen, die in einfacher Weise aus an sich bekannten, leicht erhältlichen Korrosionsschutz-Pigmenten hergestellt werden kann und in ihrer Korrosionsschutzwirkung einen vollwertigen Ersatz für Korrosionsschutz-Pigmente auf der Basis von Chrom und/oder Zink bietet.

Die neue, chromfreie, zinkarme, korrosionshemmende Pigmentmischung soll sich in einfacher Weise in härtbare Materialien, vorzugsweise Grundiermaterialien, insbesondere Primer, Grundierfüller, Füller und Spachtel, einarbeiten lassen.

Die neuen härtbaren Materialien, vorzugsweise die neuen Grundiermaterialien, insbesondere die neuen Primer, Grundierfüller, Füller und Spachtel, sollen neue, chromfreie, zinkarme, korrosionshemmende, gehärtete Materialien, insbesondere Grundierungen und Zwischenbeschichtungen, liefern, die eine Korrosionsschutzwirkung aufweisen, die der Korrosionsschutzwirkung herkömmlicher, chrom- und/oder zinkhaltiger, gehärteter Materialien zumindest vergleichbar ist, wenn nicht sogar diese übertrifft. Dabei sollen die neuen, chromfreien, zinkarmen, korrosionshemmenden Grundierungen und Zwischenbeschichtungen eine hohe Haftung zu den unterschiedlichsten Substraten, inklusive Altlackierungen, und eine hohe Zwischenschichthaftung, hervorragende mechanische Eigenschaften und eine besonders hohe Steinschlagschutzwirkung aufweisen und auch grobe Unebenheiten, von Substraten in hervorragender Weise ausgleichen.

### Erfindungsgemäße Lösung

Demgemäß wurde die neue, chromfreie, zinkarme, korrosionshemmende Pigmentmischung (A) aus
- (a1): 30 bis 60 Gew.-% mindestens eines Calciumhydrogenphosphat-Pigments,
- (a2): 15 bis 45 Gew.-% mindestens eines amorphen, calciummodifizierten Siliziumdioxids,
- (a3): 5 bis 25 Gew.-% mindestens eines Calciumborsilikat-Pigments und
- (a4): 1 bis 15 Gew.-% mindestens eines Zinksalzes einer organischen Nitroverbindung
mit der Maßgabe, dass der Zinkgehalt von (A) 10 Gew.-% nicht überschreitet, gefunden, die im Folgenden als »erfindungsgemäße Pigmentmischung (A)« bezeichnet wird.

Außerdem wurde das neue Verfahren zur Herstellung einer erfindungsgemäßen Pigmentmischung (A) gefunden, bei dem man ihre Bestandteile miteinander vermischt, wodurch eine separate erfindungsgemäße Pigmentmischung (A) resultiert, oder ihre Bestandteile (a1), (a2), (a3) und (a4) mit anderen Stoffen vermischt, wodurch in situ eine erfindungsgemäße Pigmentmischung (A) resultiert.

Im Folgenden wird das neue Verfahren zur Herstellung einer erfindungsgemäßen Pigmentmischung (A) als »erfindungsgemäßes Verfahren« bezeichnet.

Des Weiteren wurde die neue Verwendung der erfindungsgemäßen Pigmentmischung (A) und der nach dem erfindungsgemäßen Verfahren hergestellten erfindungsgemäßen Pigmentmischung (A) für die Herstellung härtbarer Materialien gefunden, was im Folgenden als »erfindungsgemäße Verwendung« bezeichnet wird.

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Pigmentmischung (A), des erfindungsgemäßen Verfahrens und der erfindungsgemäßen Verwendung gelöst werden konnte.

Insbesondere war es überraschend, dass die erfindungsgemäße Pigmentmischung (A) in einfacher Weise insbesondere nach dem erfindungsgemäßen Verfahren aus an sich bekannten, leicht erhältlichen Korrosionsschutz-Pigmenten hergestellt werden konnte und in ihrer Korrosionsschutzwirkung einen vollwertigen Ersatz für Korrosionsschutz-Pigmente auf der Basis von Chrom und/oder Zink bot.

Die erfindungsgemäße Pigmentmischung (A) ließ sich in einfacher Weise in härtbare Materialien, vorzugsweise Grundiermaterialien, insbesondere Primer, Grundierfüller, Füller und Spachtel, einarbeiten.

Die resultierenden erfindungsgemäßen härtbaren Materialien, vorzugsweise die erfindungsgemäßen Grundiermaterialien, insbesondere die erfindungsgemäßen Primer, Grundierfüller, Füller und Spachtel, waren leicht zu handhaben und zu applizieren.

Die erfindungsgemäßen härtbaren Materialien konnten nach den unterschiedlichsten Mechanismen ausgehärtet werden und waren daher außerordentlich breit anwendbar. Insbesondere wiesen sie besondere Vorteile bei der Verwendung in der Reparaturlackierung; insbesondere Autoreparaturlackierung, auf.

Die erfindungsgemäßen härtbaren Materialien lieferten neue, chromfreie, zinkarme, korrosionshemmende, gehärtete Materialien, insbesondere neuen Grundierungen und Zwischenbeschichtungen, die eine Korrosionsschutzwirkung aufwiesen, die der Korrosionsschutzwirkung herkömmlicher, chrom- und/oder zinkhaltiger, gehärteter Materialien zumindest vergleichbar war, wenn nicht sogar diese übertraf. Dabei wiesen die erfindungsgemäßen Grundierungen und Zwischenbeschichtungen eine hohe Haftung zu den unterschiedlichsten Substraten, inklusive Altlackierungen, und eine hohe Zwischenschichthaftung, hervorragende mechanische Eigenschaften und eine besonders hohe Steinschlagschutzwirkung auf und konnten auch grobe Unebenheiten von Substraten in hervorragender Weise ausgleichen.

Vor allem aber war es überraschend, dass die erfindungsgemäße Pigmentmischung (A) ihre vorteilhaften Wirkungen in den erfindungsgemäßen gehärteten Materialien bereits in einer vergleichsweise geringen Menge entfaltete.

### Ausführliche Beschreibung der Erfindung

Die erfindungsgemäße Pigmentmischung (A) ist chromfrei. D. h., dass sie Chrom allerhöchstens in Spuren enthält, die beispielsweise aufgrund eines ggf. vorhandenen natürlichen Gehalts der Bestandteile an Chromspuren eingeschleppt werden. Vorzugsweise liegt der Chromgehalt unterhalb der Nachweisgrenzen üblicher und bekannter chemischer und physikalischer Methoden zur qualitativen und quantitativen Bestimmung von Chrom.

Die erfindungsgemäße Pigmentmischung (A) ist zinkarm. D. h., dass ihr Zinkgehalt 10 Gew.-%, vorzugsweise 7 Gew.-% und insbesondere 5 Gew.-% nicht überschreitet.

Die erfindungsgemäße Pigmentmischung (A) besteht aus
- (a1): 30 bis 60 Gew.-%, vorzugsweise 35 bis 55 Gew.-% und insbesondere 40 bis 50 Gew.-% mindestens eines, insbesondere eines, Calciumhydrogenphosphat-Pigments,
- (a2): 15 bis 45 Gew.-%, vorzugsweise 20 bis 40 Gew.-% und insbesondere 25 bis 35 Gew.-% mindestens eines, insbesondere eines, amorphen, calciummodifizierten Siliziumdioxids,
- (a3): 5 bis 25 Gew.-%, vorzugsweise 7 bis 22 Gew.-% und insbesondere 10 bis 20 Gew.-% mindestens eines, insbesondere eines, Calciumborsilikat-Pigments und
- (a4): 1 bis 15 Gew.-%, vorzugsweise 2 bis 12 Gew.-%, und insbesondere 3 bis 10 Gew.-% mindestens eines, insbesondere eines, Zinksalzes einer organischen Nitroverbindung.

Vorzugsweise hat das Calciumhydrogenphosphat-Pigment (a1) einen Calciumgehalt als Calciumoxid von 38 bis 43 Gew.-%, bevorzugt 38,5 bis 42,5 Gew.-%, und einen Phosphorgehalt als Diphosphorpentoxid von 43 bis 48 Gew.-%, bevorzugt 43,5 bis 47,5 Gew.-%. Die mittlere Teilchengröße, bestimmt mit einem Coulter Multisizer II, liegt vorzugsweise bei 1 bis 10 µm, bevorzugt 1,5 bis 5 µm und insbesondere 2,5 bis 4 µm. Der Siebrückstand nach DIN 53195 (> 32 µm) liegt vorzugsweise unter 0,01 Gew.-%.

Calciumhydrogenphosphat-Pigmente (a1) sind übliche und bekannte Produkte und werden beispielsweise von der Firma Heubach unter der Marke Heucophos® CHP vertrieben.

Vorzugsweise hat das amorphe, calciummodifizierte Siliziumdioxid (a2) einen Calciumgehalt von 4 bis 8 Gew.-%_{;} bevorzugt 4,5 bis 7,5 Gew.-% und insbesondere 5 bis 7 Gew.-%. Die mittlere Teilchengröße, bestimmt mit einem Coulter Counter, 50 µm Düsenöffnung), liegt vorzugsweise bei 1 bis 10 µm, bevorzugt 1,5 bis 5 µm und insbesondere 2 bis 4 µm. Der Nasssiebrückstand (> 25 µm) liegt vorzugsweise unter 0,01 Gew.-%.

Die amorphen, calciummodifizierten Siliziumdioxide (a2) sind übliche und bekannte Produkte und werden beispielsweise von der Firma Grace unter der Marke Shieldex® AC-3 vertrieben.

Vorzugsweise hat das Calciumborsilikat-Pigment (a3) einen Gehalt an Calciumoxid von 43 bis 44 Gew.-%, einen Gehalt an Dibortrioxid von 17 bis 18 Gew.-% und einen Gehalt an Siliziumdioxid von 38 bis 39,5 Gew.-%. Es weist vorzugsweise die vorstehend beschriebenen Teilchengrößen auf.

Die Calciumborsilikat-Pigmente (a3) sind übliche und bekannte Produkte und werden beispielsweise von der Firma Lawrence Industries unter der Marke Halox® CW-2230 vertrieben.

Vorzugsweise hat das Zinksalz einer organischen Nitroverbindung (a4) einen Zinkgehalt von 40 bis 50 Gew.-%, bevorzugt 43 bis 45 Gew.-%. Es weist vorzugsweise die vorstehend beschriebenen Teilchengrößen auf. Bevorzugt liegt der Siebrückstand (> 45 µm) nach ISO 787, Teil 18, unter 0,02 Gew.-%.

Die Zinksalze organischen Nitroverbindungen (a4) sind ebenfalls übliche und bekannte Produkte und werden beispielsweise von der Firma Heubach unter der Marke Heucorin® RZ vertrieben.

Die erfindungsgemäße Pigmentmischung (A) kann in beliebiger Weise hergestellt werden. Vorzugsweise wird sie nach dem erfindungsgemäßen Verfahren hergestellt.

Bei dem erfindungsgemäßen Verfahren werden die vorstehend beschriebenen Bestandteile (a1), (a2), (a3) und (a4) vorzugsweise als pulverförmige Festkörper miteinander vermischt, wobei die üblichen und bekannten Pulvermischer verwendet werden können. Bei dieser Ausführungsform des erfindungsgemäßen Verfahrens resultieren erfindungsgemäße Pigmentmischungen (A) als separate Produkte, die bis zu ihrer bestimmungsgemäßen Verwendung ohne besondere Vorsichtsmaßnahmen gelagert und transportiert werden können, was einen weiteren besonderen Vorteil der erfindungsgemäßen Pigmentmischungen (A) darstellt.

Bei dem erfindungsgemäßen Verfahren können aber auch die vorstehend beschriebenen Bestandteile (a1), (a2), (a3) und (a4) vorzugsweise als pulverförmige Festkörper mit anderen Stoffen, vorzugsweise Bestandteilen von erfindungsgemäßen härtbaren Materialien, vermischt werden, wonach man die resultierenden Mischungen homogenisiert. Dies kann mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer erfolgen. Bei dieser Ausführungsform des erfindungsgemäßen Verfahrens resultieren in situ die erfindungsgemäßen Pigmentmischungen (A), vorzugsweise in erfindungsgemäßen Pigmentpasten oder Pigmentpräparationen (vgl. Römpp Lexiko Lacke und Druckfarben, Georg Thieme Verlag, Stuttgart, New York, 1998, »Pigmentpräparationen«) oder in den erfindungsgemäßen härtbaren Materialien.

Es ist ein weiterer besonderer Vorteil der erfindungsgemäßen Pigmentmischungen (A), nämlich dass sie sich auch in der Form der erfindungsgemäßen Pigmentpasten besonders einfach und sehr gut reproduzierbar zu den erfindungsgemäßen härtbaren Materialien verarbeiten lassen.

Die erfindungsgemäßen Pigmentmischungen (A) können außerordentlich breit eingesetzt werden; vorzugsweise werden sie im Rahmen der erfindungsgemäßen Verwendung zur Herstellung härtbarer Materialien eingesetzt.

Es ist ein ganz besonderer Vorteil der erfindungsgemäßen Pigmentmischungen (A), dass sie ihre vorteilhaften Wirkungen in vergleichsweise geringen Mengen entfalten. So liegt der Gehalt der erfindungsgemäßen härtbaren Materialien an den erfindungsgemäßen Pigmentmischungen (A) vorzugsweise bei 1 bis 50 Gew.-%, bevorzugt 1 bis 40 Gew.-% und insbesondere 1 bis 25 Gew.-%.

Vorzugsweise liegt der Zinkgehalt der erfindungsgemäßen härtbaren Materialien, jeweils bezogen auf das erfindungsgemäße Material, bei 0,002 bis 3 Gew.-%, bevorzugt 0,003 bis 2 Gew.-% und insbesondere 0,004 bis 1,5 Gew.-%.

Die erfindungsgemäßen härtbaren Materialien können physikalisch, thermisch und/oder mit aktinischer Strahlung härtbar sein.

Im Rahmen der vorliegenden Erfindung bedeutet der Begriff "physikalische Härtung" die Härtung der erfindungsgemäßen härtbaren Materialien durch Verfilmung durch Lösemittelabgabe aus den erfindungsgemäßen härtbaren Materialien, wobei die Verknüpfung innerhalb der erfindungsgemäßen härtbaren Materialien über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Hierdurch resultieren thermoplastische, erfindungsgemäße gehärtete Materialien.

Im Rahmen der vorliegenden Erfindung bedeutet der Begriff thermische Härtung" die durch Hitze initiierte Härtung des erfindungsgemäßen härtbaren Materials, bei der üblicherweise ein Bindemittel und ein separat vorliegendes Vernetzungsmittel angewandt werden. Üblicherweise wird dies von der Fachwelt als Fremdvemetzung bezeichnet. Sind die Vernetzungsmittel in die Bindemittel bereits eingebaut, spricht man auch von Selbstvernetzung (vgl. Römpp Lexikon Lacke und Druckfarben, Georg Thieme Verlag, Stuttgart, New York, 1998, »Härtung«, Seiten 274 bis 276, insbesondere Seite 275, unten). Hierdurch resultieren duroplastische, erfindungsgemäße gehärtete Materialien.

Im Rahmen der vorliegenden Erfindung wird unter aktinischer Strahlung elektromagnetische Strahlung, wie nahes Infrarot (NIR), sichtbares Licht, UV-Strahlung, Röntgenstrahlung oder Gammastrahlung, insbesondere UV-Strahlung, und Korpuskularstrahlung, wie Elektronenstrahlung, Betastrahlung, Alphastrahlung, Neutronenstrahlung oder Protonenstrahlung, insbesondere Elektronenstrahlung, verstanden. Die entsprechenden erfindungsgemäßen härtbaren Materialien enthalten somit Bestandteile, die mit aktinischer Strahlung aktivierbar sind, wodurch sie radikalisch oder ionisch, insbesondere radikalisch, polymerisieren. Hierdurch erfolgt eine dreidimensionale Vernetzung der erfindungsgemäßen härtbaren Materialien. Hierdurch resultieren duroplastische, erfindungsgemäße gehärtete Materialien.

Die erfindungsgemäßen härtbaren Materialien können nach einem Härtungsmechanismus oder nach zwei oder allen drei Härtungsmechanismen aushärten. Insbesondere sind sie thermisch härtbar.

Die erfindungsgemäßen härtbaren Materialien können in den unterschiedlichsten physikalischen Zuständen und dreidimensionalen Formen vorliegen.

So können sie bei Raumtemperatur fest oder flüssig bzw. fließfähig sein. Sie können aber auch bei Raumtemperatur fest und bei höheren Temperaturen fließfähig sein, wobei sie vorzugsweise thermoplastisches Verhalten zeigen. Insbesondere können sie konventionelle, organische Lösemittel enthaltende Materialien, wässrige Materialien, im Wesentlichen oder völlig lösemittel- und wasserfreie flüssige Materialien (100%-Systeme), im Wesentlichen oder völlig lösemittel- und wasserfreie feste Pulver oder im Wesentlichen oder völlig lösemittelfreie Pulversuspensionen (Pulverslurries) sein. Außerdem können sie Einkomponentensysteme, in denen die Bindemittel und die Vernetzungsmittel nebeneinander vorliegen, oder Zwei- oder Mehrkomponentensysteme, in denen die Bindemittel und die Vernetzungsmittel bis kurz vor der Applikation getrennt voneinander vorliegen, sein.

Methodisch weist die Herstellung der erfindungsgemäßen härtbaren Materialien keine Besonderheiten auf, sondern erfolgt durch das Vermischen und Homogenisieren ihrer Bestandteile mit Hilfe üblicher und bekannter Mischverfahren und Vorrichtungen, wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer gegebenenfalls unter Ausschluss von aktinischer Strahlung. Die Auswahl der für einen gegebenen Einzelfall optimalen Methode richtet vor allem sich nach dem physikalischen Zustand (flüssig oder fest) und der dreidimensionalen Form (Pulver, Granulat oder Folie), den das erfindungsgemäße härtbare Material haben soll.

Die erfindungsgemäßen härtbaren Materialien können den unterschiedlichsten Verwendungszwecken dienen. Vorzugsweise werden zur Herstellung die erfindungsgemäßen gehärteten Materialien verwendet.

Vorzugsweise sind die erfindungsgemäßen härtbaren Materialien Grundiermaterialien, bevorzugt Primer, Grundierfüller, Füller und Spachtel, besonders bevorzugt Grundierfüller. Bevorzugt werden diese in der Reparaturlackierung, insbesondere Autoreparaturlackierung, eingesetzt. Demnach handelt es sich bei den besonders vorteilhaften erfindungsgemäßen gehärteten Materialien um Füllerlackierungen oder Grundierfüllerlackierungen.

Vorzugsweise sind die erfindungsgemäßen Grundiermaterialien flüssige, organische Lösemittel enthaltende Einkomponentensysteme oder Zweikomponentensysteme. Diese umfassen bekanntermaßen mindestens eine Komponente I, die reaktive funktionelle Gruppen enthält, und mindestens eine Komponente II, die komplementäre reaktive funktionelle Gruppen enthält, wobei die beiden Arten von komplementären reaktiven funktionellen Gruppen so rasch miteinander reagieren können, dass die betreffenden Komponenten I und II bis zu ihrer zweckgemäßen Verwendung, d. h. der Herstellung der erfindungsgemäßen härtbaren Materialien, getrennt voneinander gelagert werden müssen. Solche komplementären reaktiven funktionellen Gruppen sind üblich und bekannt und können daher vom Fachmann aufgrund seines allgemeinen Fachwissens sehr leicht ausgewählt werden.

Bevorzugt sind die erfindungsgemäßen härtbaren Materialien flüssige, organische Lösemittel enthaltende Zweikomponentensysteme, die besonders bevorzugt eine von Isocyanatgruppen freie, isocyanatreaktive funktionelle Gruppen enthaltende Komponente I, die von der Fachwelt auch als »Stammlack I« bezeichnet wird, und eine mindestens ein Polyisocyanat enthaltende Komponente II, die von der Fachwelt auch als »Härter« bezeichnet wird, umfassen. Die Komponenten I und II werden bis zu ihrer zweckgemäßen Verwendung getrennt voneinander gelagert.

Beispiele geeigneter isocyanatreaktiver funktioneller Gruppen sind Hydroxylgruppen, Thiolgruppen und primäre und sekundäre Aminogruppen, insbesondere Hydroxylgruppen.

Zusätzlich können die erfindungsgemäßen Zweikomponentensysteme noch mindestens eine weitere Komponente III, wie beispielsweise einen so genannten Verdünner, der üblicherweise ein Gemisch aus den nachstehend beschriebenen, inerten organischen Lösemitteln ist, umfassen.

Bevorzugt liegt die erfindungsgemäße Pigmentmischung (A) in dem Stammlack I vor, der im Folgenden als »erfindungsgemäßer Stammlack I« bezeichnet wird.

Die erfindungsgemäßen Stammlacke I enthalten mindestens ein inertes organisches Lösemittel. Beispiele geeigneter Lösemittel sind aus dem Lehrbuch Paints, Coatings and Solvents, Dieter Stoye und Werner Freitag (Hrsg.), Wiley-VCH, Weinheim, New York, 1998, »14. Solvents«, Seiten 277 bis 373, bekannt. Die Eigenschaft "inert" bedeutet, dass das betreffende organische Lösemittel nicht an den Reaktionen, die bei der thermischen Härtung ablaufen, teilnimmt, sondern überwiegend oder vollständig aus den sich bildenden erfindungsgemäßen gehärteten Materialien entweicht.

Die inerten organischen Lösemittel können, wie vorstehend erwähnt, zur Herstellung des Verdünners III verwendet werden.

Die erfindungsgemäßen Stammlacke I können zusätzlich zu den inerten organischen Lösemitteln mindestens ein reaktives Lösemittel oder einen Reaktiwerdünner enthalten, das oder der an den bei der thermische Härtung ablaufenden Reaktionen teilnimmt und in das sich bildende dreidimensionale Netzwerk der erfindungsgemäßen gehärteten Materialien eingebaut wird (vgl. beispielsweise die deutsche Patentanmeldung DE 100 12 580 A1, Seite 9, Zeilen 54 und 55).

Der Gehalt der erfindungsgemäßen Stammlacke I an den organischen Lösemitteln kann sehr breit variieren und richtet sich insbesondere nach der Viskosität, den die erfindungsgemäßen Stammlacke I und die hieraus hergestellten erfindungsgemäßen Grundiermaterialien bei ihrer Handhabung und Anwendung haben müssen. Vorzugsweise liegt der Gehalt bei 5 bis 60 Gew.-%, bevorzugt 10 bis 55 Gew.-% und insbesondere 10 bis 50 Gew.-%, jeweils bezogen auf den erfindungsgemäßen Stammlack I.

Die erfindungsgemäßen Stammlacke I enthalten mindestens ein polymeres und/oder oligomeres Bindemittel. Vorzugsweise enthalten sie mindestens zwei, insbesondere drei, polymere und/oder oligomere Bindemittel.

Im Rahmen der vorliegenden Erfindung wird unter einem Oligomer eine Verbindung verstanden, die aus 2 bis 12 monomeren Struktureinheiten, die gleich oder verschieden voneinander sein können, aufgebaut ist. Unter einem Polymer wird eine Verbindung verstanden, die aus mehr als 8, insbesondere mehr als 12, monomeren Struktureinheiten, die gleich oder verschieden voneinander sein können, aufgebaut ist. Ob eine Verbindung, die aus 8 bis 12 monomeren Struktureinheiten aufgebaut ist, im Einzelfall vom Fachmann als Oligomer oder Polymer angesehen wird, richtet sich insbesondere nach dem Molekulargewicht der betreffenden Verbindung.

Als Bindemittel kommen alle üblichen und bekannten Bindemittel in Betracht, wie sie beispielsweise aus Römpp Lexikon Lacke und Druckfarben, Georg Thieme Verlag, Stuttgart, New York, »Bindemittel«, bekannt sind. Vorzugsweise werden Epoxidharze (vgl. beispielsweise die deutsche Patentanmeldung DE 100 48 268 A1, Seite 5, Absätze [0057] und [0058]), (Meth)Acrylat(co)polymerisate (vgl. beispielsweise die deutsche Patentanmeldung DE 100 12 580 A1, Seite 5, Zeile 33, bis Seite 7, Zeile 34) und /oder Nitrocellulose oder Cellulosenitrat (vgl. Römpp Lexikon Lacke und Druckfarben, Georg Thieme Verlag, Stuttgart, New York, 1998 »Cellulosenitrat«) verwendet.

Der Bindemittelgehalt der erfindungsgemäßen Stammlacke I kann sehr breit variieren und richtet sich nach den Erfordernissen des Einzelfalls. Vorzugsweise liegt der Gehalt bei 10 bis 60 Gew.-%, bevorzugt 15 bis 50 Gew.-% und insbesondere 20 bis 40 Gew.-%, jeweils bezogen auf das Grundiermaterial.

Vorzugsweise enthalten die erfindungsgemäßen Stammlacke I noch mindestens einen Füllstoff, wie er beispielsweise aus der deutschen Patentanmeldung DE 100 48 268 A1, Seite 4, Absätze [0040] und [0041], oder der deutschen Patentanmeldung DE 100 12 580 A1, Seite 9, Zeilen 39 bis 42, bekannt ist.

Vorzugsweise enthalten die erfindungsgemäßen Stammlacke I außerdem noch mindestens ein von den Bestandteilen der erfindungsgemäßen Pigmentmischung (A) verschiedenes Pigment, wie es beispielsweise aus der deutschen Patentanmeldung DE 100 48 268 A1, Seite 4, Absätze [0042] und [0043], bekannt ist.

Darüber hinaus können die erfindungsgemäßen Stammlacke I mindestens einen üblichen und bekannten Zusatzstoff, wie er beispielsweise aus der deutschen Patentanmeldung DE 100 48 268 A1, Seite 4, Absätze [0044] und [0045], oder der deutschen Patentanmeldung DE 100 12 580 A1, Seite 9, Zeile 62, bis Seite 10, Zeile 20, bekannt ist, in wirksamen Mengen enthalten.

Die Härter II der erfindungsgemäßen Zweikomponentensysteme enthalten mindestens ein Polyisocyanat oder sie bestehen hieraus. Wenn die Härter II aus mindestens einem Polyisocyanat bestehen, ist dieses vorzugsweise bei den für die Herstellung und die Verwendung der Härter II angewandten Temperaturen, insbesondere bei Raumtemperatur, flüssig. Bevorzugt bestehen die Härter II aus mindestens einem Polyisocyanat und mindestens einem der vorstehend beschriebenen inerten organischen Lösemittel. Dabei kann der Gehalt der Härter II an Polyisocyanaten breit variieren. Er richtet sich in erster Linie nach der Viskosität die die Härter II bei ihrer Anwendung haben sollen. Vorzugsweise ist diese niedrig, so dass die Härter II ohne großen apparativen, zeitlichen und energetischen Aufwand, insbesondere bei Kleinmengen auch per Hand, mit den erfindungsgemäßen Stammlacken I homogen vermischt werden können. Bevorzugt liegt der Gehalt der Härter II an Polyisocyanaten, jeweils bezogen auf den Härter II, bei 30 bis 95 Gew.-%, besonders bevorzugt 40 bis 90 Gew.-% und insbesondere 50 bis 90 Gew.-%.

Beispiele geeigneter Polyisocyanate werden im Detail in der deutschen Patentanmeldung DE 100 48 670 A1, Seite 5, Absatz [0059], bis Seite 6, Absatz [0062], beschrieben. Besonders bevorzugt werden niedrigviskose, Uretdiongruppen und/oder Iminooxadiazindiongruppen enthaltende Polyisocyanate eingesetzt.

Bei der Herstellung der bevorzugten erfindungsgemäßen Grundiermaterialien kann das Gewichtsverhältnis von erfindungsgemäßem Stammlack I und Härter II sehr breit variieren. Vorzugsweise wird das Gewichtsverhältnis so eingestellt, dass das Äquivalentverhältnis von isocyanatreaktiven funktionellen Gruppen zu Isocyanatgruppen bei 1,5 : 1 bis 1 : 1,5, bevorzugt 1,3 : 1 bis 1 : 1,3 und insbesondere 1,2 : 1 bis 1 : 1,2 liegt.

Methodisch weist die Herstellung der bevorzugten erfindungsgemäßen Grundiermaterialien aus den vorstehend beschriebenen erfindungsgemäßen Zweikomponentensystemen keine Besonderheiten auf, sondern erfolgt durch das Vermischen mindestens eines erfindungsgemäßen Stammlacks I mit mindestens einem Härter II sowie gegebenenfalls mindestens einer weiteren Komponente III, insbesondere einem Verdünner III, und dem Homogenisieren der resultierenden Mischung. Die Reihenfolge, in der die Komponenten I und II sowie gegebenenfalls III zusammengegeben werden, ist nicht kritisch, sondern kann den Erfordernissen des Einzelfalls angepasst werden. Für die Herstellung können die vorstehend beschriebenen Verfahren und Vorrichtungen verwendet werden.

Überraschenderweise haben die bevorzugten erfindungsgemäßen Grundiermaterialien bei einer besonders hohen Reaktivität, die zu einer raschen Aushärtung führt, eine besonders lange, praxisgerechte Topfzeit oder Verarbeitungszeit, was ihre Anwendung nicht nur in technischer, sondern auch in wirtschaftlicher und organisatorischer Hinsicht besonders attraktiv macht.

Methodisch weist die Applikation der bevorzugten erfindungsgemäßen Grundiermaterialien keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen.

Als Substrate kommen Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien in Betracht. Bei der efindungsgemäßen Verwendung zu Reparaturlackierung, insbesondere Autoreparaturlackierung, enthalten die Substrate eine Altlackierung (vgl. Römpp Lexikon Lacke und Druckfarben, Georg Thieme Verlag, Stuttgart, New York, 1998, »Altlackierung«).

Die bevorzugten erfindungsgemäßen. Grundiermaterialien sind auch für Anwendungen außerhalb der Reparaturlackierung, insbesondere Autoreparaturlackierung, grundsätzlich geeignet. Hierbei kommen sie insbesondere für die Lackierung von Möbeln, Fenstern, Türen, Bauwerken im Innen- und Außenbereich und die industrielle Lackierung, inklusive Coil Coating, Container Coating und die Imprägnierung oder Beschichtung elektrotechnischer Bauteile, in Betracht. Im Rahmen der industriellen Lackierungen eignen sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Werden die bevorzugten erfindungsgemäßen Grundierungsmaterialien zur Autoreparaturlackierung verwendet, sind die Substrate mit einer Altlackierung oder Erstlackierung beschichtet.

Die applizierten bevorzugten erfindungsgemäßen Grundiermaterialien zeigen ein ganz besonders vorteilhaftes Trocknungs- und Härtungsverhalten. So können sie besonders schonend während 15 Minuten bis 2 Tagen bei Raumtemperatur getrocknet werden. Sie können aber auch mit Vorteil während 10 Minuten bis 4 Stunden, insbesondere 30 Minuten bis 4 Stunden, bei 60°C getrocknet werden.

Bevorzugt werden die applizierten bevorzugen erfindungsgemäßen Grundiermaterialien, insbesondere die erfindungsgemäßen Füller oder Grundierfüller, bei der Autoreparaturlackierung, vorzugsweise nach kurzem Ablüften während 1 bis 15 Minuten, nass-in-nass mit einem üblichen und bekannten pigmentierten Zweikomponentendecklack beschichtet, wonach die erfindungsgemäße Füllerschicht oder Grundierfüllerschicht und die Decklackschicht bei Raumtemperatur oder bei Temperaturen bis zu 90°C, beispielsweise in einem Umluftofen oder bei kleineren Flächen mit Hilfe eines Föhns oder eines Infrarotstrahlers, gemeinsam getrocknet werden. Die erfindungsgemäße Füllerschicht oder Grundierfüllerschicht kann aber auch - gegebenenfalls nass-in-nass - mit einem üblichen und bekannten Basislack und einem üblichen und bekannten Klarlack überlackiert werden. Anschließend können die noch nicht gehärteten Schichten ausgehärtet werden.

Im Allgemeinen werden die erfindungsgemäßen Grundiermaterialien in einer Nassschichtdicke appliziert, dass nach ihrer Härtung erfindungsgemäße Füllerlackierungen oder Grundierfüllerlackierungen mit der für ihre Funktionen notwendigen und vorteilhaften Schichtdicken resultieren. Vorzugsweise liegen die Schichtdicken bei 20 bis 200, vorzugsweise 25 bis 180, besonders bevorzugt 30 bis 150 und insbesondere 35 bis 120 µm.

Zusätzlich zu den vorstehend beschriebenen Vorteilen der erfindungsgemäßen gehärteten Materialien, weisen die erfindungsgemäßen Füllerlackierungen und Grundierfüllerlackierungen eine besonders gute Polierbarkeit und Überlackierbarkeit auf.

### Beispiele und Vergleichsversuche

### Beispiel 1

### Die Herstellung des chromfreien, zinkarmen, korrosionshemmenden Grundierfüllers 1

Der Grundierfüller wurde durch Vermischen der folgenden Bestandteile und Homogenisieren der resultierenden Mischung hergestellt:
- 14 Gew.-% eines 60-prozentigen Lösung eines Epoxidharzes (Epikote® 1001 der Firma Resolution bzw. Hexion) in Xylol/Butylacetat,
- 12 Gew.-% der Lösung eines hydroxylgruppenhaltigen Polyacrylats (Macrynal® SM515 3. der Firma Cytec),
- 1**0 Gew.-% Calciumhydrogenphosphat-Pigment (a1)** (Heucophos® CHP der Firma Heubach),
- **6,4 Gew.-% amorphes, calciummodifiziertes Siliziumdioxid (a2)** (Shieldex® AC-3 der Firma Grace),
- **3,5 Gew.-% Calciumborsilikat-Pigment (a3)** (Halox® CW2230 der Firma Lawrence Industries),
- **1,5 Gew.-% eines Zinksalzes einer organischen Nitroverbindung (a4)** (Heucorin® RZ der Firma Heubach),
- 2 Gew.-% amorphes pyrogenes Siliziumdioxid (Aerosil® R972 der Firma Degussa),
- 11 Gew.-% Titandioxid-Pigment (TI-PURE® R960 der Firma Du Pont),
- 1 Gew.-% handelsüblicher Abtönpigmente,
- 10 Gew.-% Bariumsulfat (Blanc fixe@ N der Firma Sachtleben),
- 10 Gew.-% Talkum (Luzenac® 10M0 der Firma Talc de Luzenac),
- 4 Gew.-% Nitrocellulose-Wolle (NC Wolle LSG der Firma wolff cellulosics, 30-prozentig in Butylacetat),
- 1 Gew.-% einer Additivmischung (Verlaufsmittel, Katalysator und Haftvermittler) und
- 13,6 Gew.-% Lösemittelgemisch auf der Basis Xylol/Butylacetat.

Der resultierende Stammlack I war frei von Chrom und wies einen Zinkgehalt von 0,66 Gew.-% auf. Er war lagerstabil und leicht zu verarbeiten.

40 Vol.-Teile des Stammlacks I wurden mit 10 Vol.-Teilen eines Verdünners III auf der Basis von Xylol und Butylacetat und 10 Vol.-Teilen einer 50-prozentigen Polyisocyanatlösung II (Iminooxadiazindiongruppen haltiges Polyisocyanat, Desmodur® XP2410 der Firma Bayer Aktiengesellschaft, in Xylol/Butylacetat) vermischt. Anschließend wurde die resultierende Mischung homogenisiert.

Das Grundiermaterial wies eine praxisgerechte Topfzeit von mehreren Stunden auf und konnte sehr gut appliziert werden. Es war chromfrei und wies einen Zinkgehalt auf, der weit unter 0,66 Gew.-% lag.

### Vergleichsversuch V 1

### Die Herstellung des chromhaltigen, zinkreichen, korrosionshemmenden Grundierfüllers V 1

Beispiel 1 wurde wiederholt, nur dass an Stelle der Bestandteile (a1), (a2), (a3) und (a4) 16,5 Gew.-% Zinkphosphat eines Zinkgehalts von 55 bis 57 Gew.-% und eines Chromgehalts von 0,15 Gew.-% (Heucophos® ZPZ der Firma Heubach) verwendet wurde. Der Zinkgehalt des resultierenden Grundierfüllers lag bei 9,2 Gew.-%.

### Beispiel 2 und Vergleichsversuch V2.

### Die Herstellung der chromfreien, zinkarmen Grundierfüllerlackierung 2 und der chromhaltigen und zinkghaltigen Grundierfüllerlackierung V2

### Beispiel 2:

Der Grundierfüller 1 des Beispiels 1 wurde auf Prüftafeln aus Aluminium, Eisen und verzinktem Stahl appliziert, während einer Stunde abgelüftet und getrocknet und mit einem handelsüblichen Zweikomponentendecklack der Reihe 22 von BASF Coatings AG überschichtet, wonach die beiden Schichten an der Luft während 12 Stunden bei Raumtemperatur oder im Umluftofen während 30 Minuten bei 60°C gemeinsam getrocknet wurden.

Es resultierte die Grundierfüllerlackierung 2 der Schichtdicke 80 µm und eine Decklackierung der Schichtdicke 60 µm.

### Vergleichsversuch V2:

Beispiel 2 wurde wiederholt, nur dass an Stelle des Grundierfüllers 1 des Beispiels 1 der Grundierfüller V1 des Vergleichsversuchs V1 verwendet wurde und dass die Nassschichtdicken so eingestellt wurden, dass die Grundierfüllerlackierung V2 eine Schichtdicke von 95 µm und die Decklackierungen eine Schichtdicke von 50 µm aufwiesen.

Die Tabelle gibt einen Vergleich der wesentlichen anwendungstechnischen Eigenschaften der Mehrschichtlackierungen des Beispiels 2, umfassend die Grundierfüllerlackierung 2, und des Vergleichsversuchs V2, umfassend die Grundierfüllerlackierung V2. Dabei dient die Mehrschichtlackierung V2 des Vergleichsversuchs V2 als Referenz, und es wird bei dem Vergleich angegeben, ob die Mehrschichtlackierung 2 des Beispiels 2 nicht oder nicht signifikant (Note 0), i. S. einer signifikanten Verbesserung (Note +), i. S. einer besonders großen Verbesserung (Note ++) oder i. S. einer signifikanten Verschlechterung (Note -) von der Referenz abweicht.

**Tabelle: Vergleich der anwendungstechnische Eigenschaften der Mehrschichtlackierungen des Beispiels 2 und des Vergleichsversuchs V2 (= Referenz)**

| **Testmethode** | **Beispiel 2 Substrate:** | | |
|---|---|---|---|
| | **Al** | **Fe** | **Zn ^{a)}** |
| | | | |
| **Decklackstand** | | | |
| Note: | 0 | 0 | 0 |
| | | | |
| **Kratztest** | | | |
| **(Kabelmesser)**: | | | |
| Note: | 0 | 0 | 0 |
| | | | |
| **Gitterschnitttest** | | | |
| Note | 0 | 0 | 0 |
| | | | |
| **Wassersprüh-** | | | |
| **Test (WS)** | | | |
| (In Anlehnung an | | | |
| DIN 50907, | | | |
| Abs. 3.1): | | | |
| 1. Auswertung: | 0 | 0 | 0 |
| 4. Auswertung: | 0 | 0 | 0 |
| H/V 1 h nach | | | |
| Belastung: | 0 | 0 | + |
| | | | |
| **Schwitzwasser-** | | | |
| **Test (KK)** | | | |
| (DIN50017KK): | | | |
| 1. Auswertung: | 0 | 0 | 0 |
| 3. Auswertung: | 0 | 0 | 0 |
| H/V 1 h nach | | | |
| Belastung: | 0 | 0 | 0 |
| H/V 24 h nach | | | |
| Belastung: | 0 | 0 | 0 |
| | | | |
| **Salzsprühnebel-** | | | |
| **Test (SS) 480 h** | | | |
| (DIN 50021SS) | | | |
| sichtbare Unter- | | | |
| wanderung: | ng | + | + |
| Gekratzte Unter- | | | |
| wanderung: | ng | ++ | 0 |
| H/V 1 h nach | | | |
| Belastung: | ng | 0 | 0 |
| H/V 24 h nach | | | |
| Belastung: | ng | 0 | 0 |
| | | | |
| **Salzsprühnebel-** | | | |
| **Test (ESS) 480 h** | | | |
| (DIN 50021 ESS) | | | |
| sichtbare Unter- | | | |
| wanderung: | 0 | ng | ng |
| Gekratzte Unter- | | | |
| wanderung: | 0 | ng | ng |
| H/V 1 h nach | | | |
| Belastung: | 0 | ng | ng |
| H/V 24 h nach | | | |
| Belastung: | 0 | ng | ng |
| | | | |
| **Klimawechseltest** | | | |
| **(KWT):5 Runden** | | | |
| (VDA 621-415) | | | |
| sichtbare Unter- | | | |
| wanderung: | - | 0 | 0 |
| Gekratzte Unter- | | | |
| wanderung: | - | 0 | 0 |
| H/V 1 h nach | | | |
| Belastung: | 0 | 0 | 0 |
| H/V 24 h nach | | | |
| Belastung: | 0 | 0 | 0 |

| | | | |
|---|---|---|---|
| HN = Haftung und Verbund; a) = verzinkter Stahl ng nicht geprüft. | | | |

Die in der Tabelle zusammengestellten Ergebnisse untermauern die hervorragende Korrosionsschutzwirkung der Grundierfüllerlackierungen des Beispiels 2 auf den unterschiedlichsten Substraten, wobei die sonstigen wesentlichen anwendungstechnischen Eigenschaften weitestgehend erhalten blieben.

## Patentansprüche

1. Chromfreie, zinkarme, korrosionshemmende Pigmentmischung (A) aus
(a1) 30 bis 60 Gew.-% mindestens eines Calciumhydrogenphosphat-Pigments,
(a2) 15 bis 45 Gew.-% mindestens eines amorphen, calciummodifizierten Siliziumdioxids,
(a3) 5 bis 25 Gew.-% mindestens eines Calciumborsilikat-Pigments und
(a4) 1 bis 15 Gew.-% mindestens eines Zinksalzes einer organischen Nitroverbindung
mit der Maßgabe, dass der Zinkgehalt von (A) 10 Gew.-% nicht überschreitet.

2. Pigmentmischung (A) nach Anspruch 1, **dadurch gekennzeichnet, dass** sie 35 bis 55 Gew.-% (a1) enthält.

3. Pigmentmischung (A) nach Anspruch 1 oder 2, **dadurch gekennzeichnet, dass** sie 20 bis 40 Gew.-% (a2) enthält.

4. Pigmentmischung (A) nach einem der Ansprüche 1 bis 3, **dadurch gekennzeichnet, dass** sie 10 bis 20 Gew.-% (a3) enthält.

5. Pigmentmischung (A) nach einem der Ansprüche 1 bis 4, **dadurch gekennzeichnet, dass** sie 3 bis 12 Gew.-% (a4) enthält.

6. Pigmentmischung (A) nach einem der Ansprüche 1 bis 5, **dadurch gekennzeichnet, dass** ihr Zinkgehalt 7 Gew.-% nicht überschreitet.

7. Verfahren zur Herstellung einer chromfreien, zinkarmen, korrosionshemmenden Pigmentmischung (A) gemäß einem der Ansprüche 1 bis 6, **dadurch gekennzeichnet, dass** man ihre Bestandteile miteinander vermischt, wodurch eine separate Pigmentmischung (A) resultiert, oder ihre Bestandteile (a1), (a2), (a3) und (a4) mit anderen Stoffen vermischt, wodurch in situ eine Pigmentmischung (A) resultiert.

8. Verwendung der chromfreien, zinkarmen, korrosionshemmenden Pigmentmischung (A) gemäß einem der Ansprüche 1 bis 6 und der nach dem Verfahren gemäß Anspruch 7 hergestellten chromfreien, zinkarmen, korrosionshemmenden Pigmentmischung (A) für die Herstellung härtbarer Materialien.

9. Verwendung nach Anspruch 8, **dadurch gekennzeichnet, dass** die härtbaren Materialien physikalisch, thermisch und/oder mit aktinischer Strahlung härtbar sind.

10. Verwendung nach Anspruch 8 oder 9, **dadurch gekennzeichnet, dass** die härtbaren Materialien Grundiermaterialien sind.

11. Verwendung nach Anspruch 9, **dadurch gekennzeichnet, dass** die Grundiermaterialien Primer, Grundierfüller, Füller und Spachtel sind.

12. Verwendung nach einem der Ansprüche 8 bis 11, **dadurch gekennzeichnet, dass** die härtbaren Materialien Zweikomponentensysteme oder Mehrkomponentensysteme sind.

13. Verwendung nach Anspruch 12, **dadurch gekennzeichnet, dass** -die Zweikomponentensysteme oder Mehrkomponentensysteme
(I) mindestens eine Komponente, enthaltend isocyanatreaktive funktionelle Gruppen, und
(II) mindestens eine Komponente, enthaltend mindestens ein Polyisocyanat,
umfassen.

14. Verwendung nach einem der Ansprüche 8 bis 13, **dadurch gekennzeichnet, dass** die härtbaren Materialien der Herstellung von gehärteten Materialien dienen.

15. Verwendung nach einem der Ansprüche 8 bis 14, **dadurch gekennzeichnet, dass** die gehärteten Materialien Grundierungen und Zwischenbeschichtungen sind.

16. Verwendung nach einem der Ansprüche 8 bis 15, **dadurch gekennzeichnet, dass** die härtbaren und die gehärteten Materialien in der Autoreparaturlackierung verwendet werden.

## Claims

1. Chromium-free, low-zinc, corrosion-inhibiting pigment mixture (A) comprising
(a1) 30% to 60% by weight of at least one calcium hydrogen phosphate pigment,
(a2) 15% to 45% by weight of at least one amorphous, calcium-modified silicon dioxide,
(a3) 5% to 25% by weight of at least one calcium borosilicate pigment, and
(a4) 1% to 15% by weight of at least one zinc salt of an organic nitro compound
with the proviso that the zinc content of (A) does not exceed 10% by weight.

2. Pigment mixture (A) according to Claim 1, **characterized in that** it contains 35% to 55% by weight of (a1).

3. Pigment mixture (A) according to Claim 1 or 2, **characterized in that** it contains 20% to 40% by weight of (a2).

4. Pigment mixture (A) according to any one of Claims 1 to 3, **characterized in that** it contains 10% to 20% by weight of (a3).

5. Pigment mixture (A) according to any of Claims 1 to 4, **characterized in that** it contains 3% to 12% by weight of (a4).

6. Pigment mixture (A) according to any one of Claims 1 to 5, **characterized in that** its zinc content does not exceed 7% by weight.

7. Process for preparing a chromium-free, low-zinc, corrosion-inhibiting pigment mixture (A) according to any one of Claims 1 to 6, **characterized in that** its constituents are mixed with one another to give a separate pigment mixture (A), or its constituents (a1), (a2), (a3), and (a4) are mixed with other substances, to give a pigment mixture (A) in situ.

8. Use of the chromium-free, low-zinc, corrosion-inhibiting pigment mixture (A) according to any one of Claims 1 to 6 and of the chromium-free, low-zinc, corrosion-inhibiting pigment mixture (A) prepared by the process according to Claim 7 for preparing curable materials.

9. Use according to Claim 8, **characterized in that** the curable materials are curable physically, thermally and/or with actinic radiation.

10. Use according to Claim 8 or 9, **characterized in that** the curable materials are priming materials.

11. Use according to Claim 9, **characterized in that** the priming materials are primers, primer-surfacers, surfacers, and putties.

12. Use according to any one of Claims 8 to 11, **characterized in that** the curable materials are two-component systems or multicomponent systems.

13. Use according to Claim 12, **characterized in that** the two-component systems or multicomponent systems comprise
(I) at least one component containing isocyanate-reactive functional groups, and
(II) at least one component containing at least one polyisocyanate.

14. Use according to any one of Claims 8 to 13, **characterized in that** the curable materials are used to produce cured materials.

15. Use according to any one of Claims 8 to 14, **characterized in that** the cured materials are prime coats and intermediate coatings.

16. Use according to any one of Claims 8 to 15, **characterized in that** the curable materials and the cured materials are used in automotive refinish.

## Revendications

1. Mélange pigmentaire exempt de chrome, pauvre en zinc, inhibant la corrosion (A) constitué par
(a1) 30 à 60% en poids d'au moins un pigment d'hydrogénophosphate de calcium,
(a2) 15 à 45% en poids d'au moins un dioxyde de silicium amorphe, modifié par du calcium,
(a3) 5 à 25% en poids d'au moins un pigment de borosilicate de calcium, et
(a4) 1 à 15% en poids d'au moins un sel de zinc d'un composé nitro organique
à condition que la teneur en zinc de (A) ne dépasse pas 10% en poids.

2. Mélange pigmentaire (A) selon la revendication 1, **caractérisé en ce qu'**il contient 35 à 55% en poids de (a1).

3. Mélange pigmentaire (A) selon la revendication 1 ou 2, **caractérisé en ce qu'**il contient 20 à 40% en poids de (a2).

4. Mélange pigmentaire (A) selon l'une quelconque des revendications 1 à 3, **caractérisé en ce qu'**il contient 10 à 20% en poids de (a3).

5. Mélange pigmentaire (A) selon l'une quelconque des revendications 1 à 4, **caractérisé en ce qu'**il contient 3 à 12% en poids de (a4).

6. Mélange pigmentaire (A) selon l'une quelconque des revendications 1 à 5, **caractérisé en ce que** sa teneur en zinc ne dépasse pas 7% en poids.

7. Procédé pour la préparation d'un mélange pigmentaire exempt de chrome, pauvre en zinc, inhibant la corrosion (A) selon l'une quelconque des revendications 1 à 6, **caractérisé en ce qu'**on mélange ses constituants les uns avec les autres, suite à quoi on obtient un mélange pigmentaire séparé (A) ou on mélange ses constituants (a1), (a2), (a3) et (a4) avec d'autres substances, suite à quoi on obtient un mélange pigmentaire (A) in situ.

8. Utilisation du mélange pigmentaire exempt de chrome, pauvre en zinc, inhibant la corrosion (A) selon l'une quelconque des revendications 1 à 6 et du mélange pigmentaire exempt de chrome, pauvre en zinc, inhibant la corrosion (A) préparé selon le procédé selon la revendication 7 pour la préparation de matériaux durcissables.

9. Utilisation selon la revendication 8, **caractérisée en ce que** les matériaux durcissables peuvent être durcis physiquement, thermiquement et/ou par un rayonnement actinique.

10. Utilisation selon la revendication 8 ou 9, **caractérisée en ce que** les matériaux durcissables sont des matériaux d'apprêt.

11. Utilisation selon la revendication 9, **caractérisée en ce que** les matériaux d'apprêt sont des apprêts primaires, des fillers d'apprêt, des fillers et des enduits.

12. Utilisation selon l'une quelconque des revendications 8 à 11, **caractérisée en ce que** les matériaux durcissables sont des systèmes à deux composants ou à plus de deux composants.

13. Utilisation selon la revendication 12, **caractérisée en ce que** les systèmes à deux composants ou à plus de deux composants comprennent
(I) au moins un composant, contenant des groupes fonctionnels réactifs avec isocyanate, et
(II) au moins un composant, contenant au moins un polyisocyanate.

14. Utilisation selon l'une quelconque des revendications 8 à 13, **caractérisée en ce que** les matériaux durcissables servent à la production de matériaux durcis.

15. Utilisation selon l'une quelconque des revendications 8 à 14, **caractérisée en ce que** les matériaux durcis sont des apprêts et des revêtements intermédiaires.

16. Utilisation selon l'une quelconque des revendications 8 à 15, **caractérisée en ce que** les matériaux durcissables et les matériaux durcis sont utilisés dans le laquage de réparation de voitures.
